# EUROPEAN PATENT APPLICATION

(11) **EP 3 572 533 A1**
(43) Date of publication of application: **27.11.2019**
(21) Application number: 18741723.3
(22) Date of filing: 15.01.2018
(51) Int. Cl.: C21C 5/28, C04B 5/00, C21C 1/02, C21C 7/00, C22B 7/04

(54) **METHOD FOR ELUTING CALCIUM FROM STEELMAKING SLAG, AND METHOD FOR COLLECTING CALCIUM FROM STEELMAKING SLAG**

(30) Priority: 18.01.2017 JP 2017006614
(71) Applicant: Nisshin Steel Co., Ltd., Chiyoda-ku Tokyo 100-8366 (JP)
(72) Inventor: FUKUI, Yasushi, Tokyo 100-8366 (JP); ASABA, Akihiro, Tokyo 100-8366 (JP)
(74) Representative: Patentanwaltskanzlei WILHELM & BECK
(86) International application number: PCT/JP2018/000837
(87) International publication number: WO 2018/135439

(57) **Abstract**

The purpose of the present invention is to provide a method for eluting Ca from steelmaking slag such that a large amount of Ca can be eluted from the steelmaking slag into an aqueous solution containing carbon dioxide. The present invention executes, in this order: a step for removing an iron-containing compound from steelmaking slag by performing magnetic separation on the steelmaking slag; and a step for bringing the steelmaking slag subjected to magnetic separation into contact with an aqueous solution containing carbon dioxide. In addition, the aqueous solution containing carbon dioxide and the steelmaking slag are brought into contact with each other while the steelmaking slag is being pulverized or the surface of the steelmaking slag is being ground.

## Description

### Technical Field

The present invention relates to a method for eluting calcium from steelmaking slag, and a method for recovering calcium from steelmaking slag.

### Background Art

Steelmaking slag (such as converter slag, pretreatment slag, secondary refining slag and electric furnace slag) generated during a steelmaking process is used in various applications, for example, as cement materials, road base materials, construction materials and fertilizers (see NPLs 1 to 3). Some of steelmaking slag not used for the above applications is landfilled.

Steelmaking slag is known to contain elements, such as calcium (Ca), iron (Fe), silicon (Si), manganese (Mn), magnesium (Mg), aluminum (Al), phosphorus (P), titanium (Ti), chrome (Cr) and sulfur (S). The element contained most in steelmaking slag is Ca which is used in a large amount during a steelmaking process, and usually, Fe is the second most contained element. Typically, Ca and Fe occupy about 20 mass% to 50 mass% and about 1 to 30 mass% of the total mass of steelmaking slag, respectively.

Steelmaking slag contains Ca in the forms of, for example, free lime (as remaining quicklime (CaO) which is fed during the steelmaking process, or quicklime precipitated during solidification of the steelmaking slag), calcium hydroxide (Ca(OH)₂) or calcium carbonate (CaCO₃) each generated from the free lime reacting with water vapor or carbon dioxide in the air, and/or calcium silicate (such as Ca₂SiO₄ or Ca₃SiO₅) or calcium iron aluminum oxide (Ca₂(Al_{1-X}Fe_{X})₂O₅) each generated from calcium reacting with, for example, Si or Al (hereinafter, the compounds containing calcium in steelmaking slag are also collectively referred to as "Ca compounds").

Calcium carbonate and calcium oxide are major slag-forming materials in pig iron making process during an iron-making process and in a steel making process, and used as, for example, a modifier for the basicity and viscosity of the slag, or a dephosphorizing agent of molten steel. In addition, calcium hydroxide obtained by adding water to calcium oxide is used as a neutralizer for, for example, acids in a draining process. Therefore, recovering the Ca compounds contained in steelmaking slag, and reusing the same in the iron-making process is expected to reduce iron-making costs.

In the future, due to, for example, the change in the social environment, there is a possibility that the number of public engineering works utilizing steelmaking slag as, for example, road base materials, construction materials and cement materials may decrease, or land that can be used for landfilling steelmaking slag may decrease. From the above view point, there is also a demand for reduction in the volume of steelmaking slag that is reused or landfilled by recovering Ca compounds contained in the steelmaking slag.

Ca in steelmaking slag may be recovered by, for example, eluting the same in an acidic aqueous solution, such as hydrochloric acid, nitric acid or sulfuric acid. However, the salts of the above compounds with the acid generated in the method are difficult to reuse. For example, calcium chloride generated by eluting Ca from steelmaking slag into hydrochloric acid can be reused as an oxide by heating the same, however, the cost for processing toxic chloride gas generated during the heating is disadvantageously high. Recovering Ca in steelmaking slag by eluting the same into an acidic aqueous solution also require high costs for purchasing acids and disposing the acids after the eluting process.

The disadvantage regarding the usage of acids, meanwhile, is expected to become irrelevant when Ca is recovered by eluting the same from steelmaking slag into an aqueous solution containing carbon dioxide (hereinafter, also simply referred to as a "CO₂ aqueous solution") (see PTLs 1 to 3). Carbon dioxide is contained in an exhaust gas in a large amount, and the desulfurization and denitration of the exhaust gas enable obtainment of a gas composed of substantially carbon dioxide other than air and water vapor. Industrially, a technology that extracts carbon dioxide from an exhaust gas is in practical use as described in non-patent literature (NPL) 4.

PTL 1 describes a method in which carbon dioxide is blown into an aqueous solution having therein calcium eluted from converter slag to allow calcium carbonate to settle out, followed by recovering the same. During this procedure, the lower limit of the pH is maintained at about 10 for suppressing the generation of calcium hydrogen carbonate which is highly soluble in water. Although PTL 1 does not describe a specific way for maintaining the pH at 10 or more, the inventors consider that the pH is maintained at 10 or more by adjusting the amount of blown carbon dioxide.

PTL 2 describes a method in which fractured steelmaking slag is separated into an iron-condensed phase and a phosphorus-condensed phase, calcium compositions in the phosphorus-condensed phase are dissolved in rinse water containing carbon dioxide dissolved therein, and then the rinse water is heated to 50 to 60°C to allow calcium hydrogen carbonate therein to settle out as calcium carbonate, followed by recovering the same.

PTL 3 describes a method for recovering calcium compounds by eluting the compounds from steelmaking slag in multiple processes. In the method, 2CaO/SiO2 phase and phosphorus in a state of solid solution therein are preferentially eluted by immersing steelmaking slag (pretreatment slag) several times in water containing carbon dioxide blown therein.

Steelmaking slag contains Fe, meanwhile, in the forms of an iron-based oxide, calcium iron aluminum oxide and, in an extremely small amount, metal iron. The iron-based oxide contains Mn or Mg, and a small amount of elements, such as Ca, Al, Si, P, Ti, Cr and S. Calcium iron aluminum oxide also contains a small amount of elements, such as Si, P, Ti, Cr and S. As used herein, the iron-based oxides include compounds formed from the iron-based oxides whose surface or the like is partly altered to hydroxides or the like by, for example, water vapor in the air, and also the calcium iron aluminum oxides include compounds formed from the calcium iron aluminum oxides whose surface or the like is partly altered to hydroxides, carbonates or the like by, for example, water vapor or carbon dioxide in the air.

The iron-based oxides exist mostly as wustite (FeO), but also as hematite (Fe₂O₄) and magnetite (Fe₃O₄).

As the wustite and hematite contain magnetite (Fe₃O₄), which is ferromagnetic, dispersed in the inside, they can be separated from steelmaking slag by magnetic separation. The magnetite that exists alone or with other iron-based oxides can also be separated from steelmaking slag by magnetic separation.

PTLS 4 to 6 describe methods for modifying wustite to magnetite by oxidation or the like for separating larger amount of iron-based oxides by magnetic separation.

The calcium iron aluminum oxide is magnetized to become magnetic, and thus can be separated from steelmaking slag by magnetic separation.

The iron-based oxides and calcium iron aluminum oxides contain only a small amount of phosphorus (0.1 mass% or less), and thus can be used as a source for a blast furnace or sintering when separated from steelmaking slag by, for example, the magnetic separation and recovered (hereinafter, iron-based oxides and calcium iron aluminum oxides are also collectively referred to as "iron-based compounds." Calcium iron aluminum oxide is a Ca compound as well as an iron-based compound).

Metal iron is referred to Fe caught in slag during a steelmaking process, or minute Fe precipitated during the solidification of steelmaking slag. Larger metal iron is removed by magnetic separation or the like during dry processes, such as fracturing or pulverizing steelmaking slag in the air.

### Citation List

### Patent Literature

PTL1
   Japanese Patent Application Laid-Open No. S55-100220
PTL 2
   Japanese Patent Application Laid-Open No. 2010-270378
PTL 3
   Japanese Patent Application Laid-Open No. 2013-142046
PTL4
   Japanese Patent Application Laid-Open No. S54-88894
PTL5
   Japanese Patent Application Laid-Open No. S54-57529
PTL6
   Japanese Patent Application Laid-Open No. S52-125493

### Non-Patent Literature

NPL 1
   Masao NAKAGAWA "Current Status on the Effective Utilization of Iron and Steelmaking Slag" Lecture Text of Nos. 205 and 206 NISHIYAMA Memorial Technical Course, The Iron and Steel Institute of Japan, June, 2011, p.25-56
NPL 2
   "Kankyo-shizai Tecckou suragu (Environmental Materials, Iron and Steel Slag)" Nippon Slag Association, January, 2014
NPL 3
   Takayuki FUTATSUKA et al., "Dissolution Behavior of Elements in Steelmaking Slag into Artificial Seawater" Tetsu-to-Hagane (Iron and Steel) Vol. 89, No. 4, January, 2014, P.382-387
NPL 4
   Masaki Iijima et al., "CO2 Capture Technology for Combating Global Warming and Climate Change" Mitsubishi Heavy Industries Technical Review Vol. 47 No. 1, 2010, P. 47-53

### Summary of Invention

### Technical Problem

As described above, recovery of Ca from steelmaking slag provides various advantages, and thus there is always a demand for increasing a recovery rate of Ca from steelmaking slag.

In the method described in PTL 1, a higher amount of blown carbon dioxide leads to a pH lower than 10, and a lower amount of the blown carbon dioxide leads to the decrease in the precipitation amount of Ca. Therefore, the amount of blown carbon dioxide should be precisely adjusted for increasing a recovery rate of Ca, which makes a recovery process complicated and increases recovery cost.

The method described in PTL 2 uses a mineral acid, and therefore a large amount of the mineral acid and salt of calcium with the mineral acid remain after the precipitation and recovery of calcium as calcium carbonate. Separation of these compounds requires a large amount of water and high-temperature heating. Accordingly, the method described in PTL 2 suffers complicated processes and increased recovery cost. Further, when steelmaking slag is washed with rinse water containing carbon dioxide (aqueous solution containing calcium hydrogen carbonate) to dissolve calcium in the slag, the pH of the rinse water having calcium dissolved therein is neutral to weak alkaline as the rinse water contains calcium hydrogen carbonate. When mixing the rinse water with a liquid leached by the mineral acid to neutralize the leached liquid and precipitate calcium carbonate, the mixed liquid is acidified due to the mineral acid, thereby increasing the dissolution amount (solubility) of calcium in the aqueous solution. This lowers the recovery efficiency of calcium because a large amount of calcium still remains in the mixed liquid even when calcium carbonate is precipitated.

In the method described in PTL 3, it is necessary to further increase the number of processes of dissolving Ca compounds for increasing a recovery rate of Ca. This complicates a recovery process and a process for uniting the recovered Ca compounds, and thus increases recovery cost.

The conventional methods thus have a disadvantage in that any effort for increasing a recovery rate of Ca results in a complicated recovery process to lengthen the recovery time, thereby increasing the recovery cost. The recovery rate of Ca would be easily increased when the amount of calcium compounds eluted into a CO₂ aqueous solution is increased.

However, PTLs 1 and 2 do not suggest any effort for increasing the amount of Ca compounds eluted into a CO₂ aqueous solution. The method described in PTL 3 may be capable of increasing total elution amount of Ca by increasing the number of processes of dissolving Ca compounds; however, as described above, this may results in the processes being complicated and the recovery cost being increased in this method.

In view of the above disadvantage, the present invention is made with an object to provide a method for eluting Ca from steelmaking slag, which can elute a larger amount of Ca from the steelmaking slag into a CO₂ aqueous solution, and a method for recovering Ca eluted by the method for the eluting.

### Solution to Problem

In view of the above object, the present invention relates to a method for eluting calcium from steelmaking slag, which includes a step of removing a compound containing iron from the steelmaking slag by subjecting the steelmaking slag to magnetic separation; and a step of contacting the steelmaking slag subjected to the magnetic separation with an aqueous solution containing carbon dioxide.

In addition, the present invention relates to a method for recovering calcium from steelmaking slag, which includes a step of eluting calcium from the steelmaking slag by the above method; and a step of recovering the eluted calcium.

### Advantageous Effects of Invention

The present invention provides a method for eluting Ca from steelmaking slag, which can elute a larger amount of Ca from the steelmaking slag into a CO₂ aqueous solution, and a method for recovering Ca eluted by the method for the eluting.

### Brief Description of Drawings

FIG. 1 is a flowchart of a method according to the first embodiment of the present invention, for eluting Ca from steelmaking slag;
FIG. 2 is a flowchart illustrating a method according to the first mode of the second embodiment of the present invention, for eluting Ca from steelmaking slag;
FIG. 3 is a flowchart illustrating a method according to the second mode of the second embodiment of the present invention, for eluting Ca from steelmaking slag;
FIG. 4 is a flowchart illustrating a method according to the third mode of the second embodiment of the present invention, for eluting Ca from steelmaking slag;
FIG. 5 is a flowchart illustrating a method according to the fourth mode of the second embodiment of the present invention, for eluting Ca from steelmaking slag;
FIG. 6 is a flowchart of a method according to the third embodiment of the present invention, for recovering Ca eluted in a CO₂ aqueous solution;
FIG. 7 is a flowchart illustrating an exemplary step of recovering Ca in the third embodiment of the present invention; and
FIG. 8 is a graph showing the relationship between pH and the existence ratio of each carbonate species in a CO₂ aqueous solution.

### Description of Embodiments

Ca contained in steelmaking slag has a high solubility in a CO₂ aqueous solution, while Fe has a low solubility therein. Therefore, according to the present inventors' findings, when dissolving Ca in a CO₂ aqueous solution, Fe remains on the surface of the steelmaking slag as a hydroxide, carbonate and/or hydrate thereof, or is precipitate on the surface of the steelmaking slag after being eluted into the CO₂ aqueous solution. The remaining or precipitated Fe on the steelmaking slag surface may prevent the steelmaking slag surface from contacting the CO₂ aqueous solution, thereby lowering the elution rate of Ca compared to an ideal state.

During the procedure, Ca is expected to dissolve more easily in a CO₂ aqueous solution by bringing the steelmaking slag into contact with the CO₂ aqueous solution while the steelmaking slag is pulverized or the surface of the steelmaking slag is ground to make the contact of Ca in the steelmaking slag to the CO₂ aqueous solution easier. However, Fe-containing compounds, such as iron-based compounds have high hardness and also are less likely to be granulated by the reaction with the CO₂ aqueous solution. Accordingly, large iron-based compounds remain as they are, thereby making mechanical pulverizing or grounding of the Ca compounds difficult in some cases.

Further, calcium iron aluminum oxide containing Ca and Fe would have more concentrated Al as Ca in the compound eluted. Al has a low solubility in a CO₂ aqueous solution as Fe. It is considered that the concentrated Al, as Fe, also prevents the steelmaking slag surface from contacting the CO₂ aqueous solution, thereby further lowering the elution rate of Ca.

The present inventors have found that Ca compounds dissolve more easily in a CO₂ aqueous solution by subjecting the steelmaking slag prior to being in contact with the CO₂ aqueous solution to magnetic separation, thereby removing the Fe-containing compounds, such as iron-based compounds, from the steelmaking slag, and completed the present invention. Subjecting steelmaking slag to magnetic separation prior to the contacting with a CO₂ aqueous solution is considered to suppress the prevention of contact between the steelmaking slag surface and the CO₂ aqueous solution due to the Fe remaining or precipitated on the steelmaking slag surface, or suppress the prevention of pulverizing or grounding due to the Fe-containing compounds, thereby allowing the contact of Ca in the steelmaking slag to the CO₂ aqueous solution easier.

According to the present inventors' findings, calcium iron aluminum oxide becomes difficult to be magnetized after the elution of Ca therefrom by the contact with the CO₂ aqueous solution, and thus the recovery of the calcium iron aluminum oxide by magnetic separation thereafter becomes difficult. Performing magnetic separation prior to the contacting with the CO₂ aqueous solution, meanwhile, enables recovering calcium iron aluminum oxide in the steelmaking slag, as well as reusing Fe derived from the calcium iron aluminum oxide.

In the following, more specific examples of the methods of the present invention for eluting Ca, and for recovering Ca will be described.

### 1. Method for eluting Ca from Steelmaking Slag

### [First Embodiment]

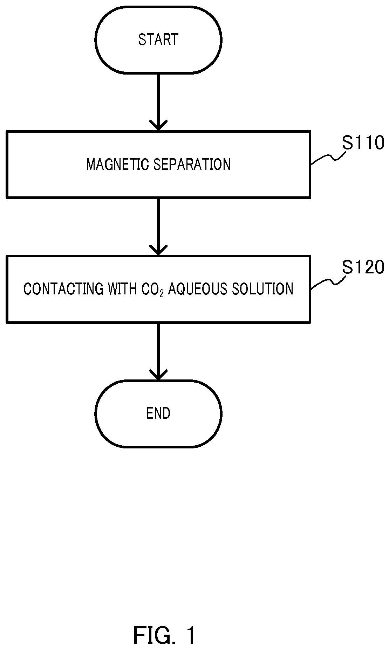

FIG. 1 is a flowchart of a method according to the first embodiment of the present invention, for eluting Ca from steelmaking slag. As illustrated in FIG. 1, the method according to the present embodiment for eluting Ca from steelmaking slag includes a step of subjecting the steelmaking slag to magnetic separation (Step S110: hereinafter also referred to as "magnetic separation step"); and a step of bringing the steelmaking slag subjected to the magnetic separation into contact with a CO₂ aqueous solution (Step S120: hereinafter also referred to as "contact step").

### (Magnetic Separation Step: Magnetic Separation of Steelmaking Slag)

In the present step, steelmaking slag is subjected to magnetic separation (Step S110).

Any steelmaking slag may be used as long as the steelmaking slag is discharged during a steel making process. Examples of the steelmaking slag include converter slag, pretreatment slag, secondary refining slag and electric furnace slag.

Steelmaking slag discharged during a steel making process may be used as it is, or steelmaking slag fractured after the discharging may be used. When using fractured steelmaking slag, the fractured slag particles preferably have a maximum particle diameter such that the size of the particles becomes the same as or smaller than the structure of the iron-based compound, and preferably of 1,000 µm or less (hereinafter, the particles are also simply referred to as "slag particles," and simply referred "steelmaking slag" includes both the fractured particles and non-fractured steelmaking slag). The maximum particle diameter of 1,000 µm or less allows the iron-based compound to exist as a single particle, and thus the iron-based compound is more likely to be selectively captured. Slag particles with the maximum particle diameter of 1,000 µm or less have a larger surface area per volume, and allow water or a CO₂ aqueous solution to satisfactorily permeate through the steelmaking slag. This enables elution of a larger amount of Ca in a below-described contact step. Any conventional crusher can fracture steelmaking slag until the maximum particle diameter thereof falls within the above range.

From a similar view, the maximum particle diameter of the slag particles is preferably 500 µm or less, more preferably 250 µm or less and even more preferably 100 µm or less. The maximum particle diameter of the slag particles can be reduced to fall within the above range by, for example, further fracturing the fractured slag particles using a crusher, such as a hammer mill, a roller mill or a ball mill.

The steelmaking slag is preferably subjected to heat treatment before the magnetic separation. Subjecting the steelmaking slag to the heat treatment increases the magnetization of iron-based compound and metal iron, and thus a larger amount of the iron-based compound can be removed by the magnetic separation. The heat treatment is preferably performed at a temperature of 300°C or more and 1,000°C or less for 0.01 minute or more and 60 minutes or less.

During the magnetic separation, steelmaking slag may be in a dried state, but preferably is slurry dispersed in water. Slug particles in the slurry-formed steelmaking slag are easily dispersed by, for example, the polarity of water molecules and/or a water flow, and thus the iron-based compound and metal iron are more likely to be selectively captured by a magnetic force. In particular, slag particles having the particle diameter of 1,000 µm or less are more likely to agglomerate in a gas, such as the air by the electrostatic force between the slag particles, liquid bridge by agglomerated water vapor or the like, but are satisfactorily dispersed in slurry. Further, as the metal iron in steelmaking slag is minute, capturing the metal iron in dried steelmaking slag is difficult, but metal iron dispersed in water of the slurry-formed steelmaking slag can be captured more easily by magnetic separation.

As the steelmaking slag, remaining-after-filtration slag may be used, which is obtained by placing steelmaking slag into a container including water therein, and leaching free lime, calcium hydroxide, and Ca on the top surface of Ca compounds, followed by filtration. Using the remaining-after-filtration slag means using slag from which Ca has been partly eluted, and thus a load on a below-described contact step can be reduced.

Further, simultaneously obtained filtered water which contains leached Ca is a highly alkaline aqueous solution having a pH of 11 or more (hereinafter, also simply referred to as "slag-immersed water"). The slag-immersed water can be used for precipitation of a solid component containing Ca (precipitation step) during the recovery of Ca, as described below. The slag-immersed water can also be used in applications that require an alkaline aqueous solution, such as a neutralizer for acidic waste water. Further, subjecting the remaining-after-filtration slag to hydration treatment by below-described still standing with contained water gives advantages such that kneading with water is not necessary.

The magnetic separation may be performed by any conventional magnetic separator. The magnetic separator may be a wet type or a dry type, and can be selected in accordance with the state of the steelmaking slag (in a dried state or a slurry form). In addition, the magnetic separator can be appropriately selected from a drum type, a belt type, a flowing-between-fixed-magnets type and the like. The drum type magnetic separator is preferable as handling of the slurry-formed steelmaking slag is easy and the magnetic separation amount can be easily increased by increasing the magnetic force in the drum type magnetic separator. The magnet used in the magnetic separator maybe a permanent magnet or an electromagnet.

The magnetic flux density of a magnet may be at least at a level such that iron-based compounds and metal iron can be selectively captured from other compounds contained in steelmaking slag, and, for example, 0.003T or more and 0.5T or less, preferably 0.005T or more and 0.3T or less, and more preferably 0.01T or more and 0.15T or less.

The magnetic separation is not necessarily performed until all the iron-based compounds contained in the steelmaking slag are removed. Even if the magnetic separation removes only a small amount of iron-based compounds from steelmaking slag, the present invention can provide the effect, namely easier elution of Ca into a CO₂ aqueous solution compared to conventional methods. Accordingly, the period of time, number and the like of the magnetic separation(s) may be appropriately selected in accordance with, for example, effects of the magnetic separation on the production cost.

The steelmaking slag in a solid or slurry form after the removal of iron-based compounds and metal iron by the magnetic separation may be used for a contact step as it is; however, steelmaking slag in a slurry form is preferably separated into steelmaking slag and a liquid component by solid-liquid separation. The solid-liquid separation may be performed by any conventional method, such as vacuum filtration or pressure filtration. The liquid component obtained by the solid-liquid separation (hereinafter, also simply referred to as a "magnetic-separation water") becomes alkaline as the magnetic-separation water contains Ca eluted from the steelmaking slag in addition to water used for forming the slurry. Therefore, the liquid component can be used for a below-described step of increasing the pH of a CO₂ aqueous solution which has been in contact with steelmaking slag and thus includes Ca eluted therein, during the precipitation of the eluted Ca.

The magnetic-separation-removed slag which is removed from steelmaking slag by the magnetic separation contains a large amount of Fe-containing compounds, such as iron-based compounds and metal iron as described above, and thus can be reused as a source for a blast furnace or sintering.

### (Contact Step: Bringing Steelmaking Slag into contact with CO₂ aqueous solution)

In the present step, steelmaking slag is brought into contact with a CO₂ aqueous solution. Specifically, the steelmaking slag is immersed in the CO₂ aqueous solution to elute Ca contained in the steelmaking slag into the aqueous solution (Step S120).

The steelmaking slag may be immersed in water in which carbon dioxide is previously dissolved, or the steelmaking slag may be immersed in water followed by the dissolution of carbon dioxide in the water, in the present step. During the immersion of the steelmaking slag in the CO₂ aqueous solution, it is preferred that the steelmaking slag and the CO₂ aqueous solution are stirred for accelerating reactions.

Carbon dioxide can be dissolved in water by, for example, bubbling (blowing) a gas containing carbon dioxide. It is preferred that 30 mg/L or more of non-ionized carbon dioxide (free carbonate) is dissolved in the CO₂ aqueous solution for increasing elution of Ca from the steelmaking slag. The amount of free carbonate that may be contained in tap water in general is 3 mg/L or more and 20 mg/L or less.

The gas containing carbon dioxide may be pure carbon dioxide gas, or a gas containing carbon dioxide and components, such as oxygen and nitrogen in addition. Examples of the gases containing carbon dioxide include an exhaust gas after combustion, and a mixed gas of carbon dioxide, air and water vapor. For increasing elution of Ca compounds (e.g., calcium silicate) from the steelmaking slag into a CO₂ aqueous solution by increasing the concentration of carbon dioxide in the CO₂ aqueous solution, the gas containing carbon dioxide preferably contains carbon dioxide in high concentration (e.g. 90%).

During the elution of Ca, the amount of carbon dioxide in the CO₂ aqueous solution decreases with the dissolution of Ca since Ca reacts with carbon dioxide and forms water-soluble calcium hydrogen carbonate. Therefore, it is preferred to keep providing carbon dioxide to the CO₂ aqueous solution after the steelmaking slag is immersed in the CO₂ aqueous solution.

For satisfactorily eluting Ca contained in the steelmaking slag, the amount of the steelmaking slag in a CO₂ aqueous solution is preferably 1 g/L or more or 100g/L or less, and more preferably 2 g/L or more or 40 g/L or less. The immersion is performed preferably for three minutes or more, and more preferably for five minutes or more, for satisfactorily eluting Ca contained in the steelmaking slag.

### (Effects)

The first embodiment is capable of easier elution of Ca compounds contained in steelmaking slag into a CO₂ aqueous solution, and thus a larger amount of Ca can be eluted into the CO₂ aqueous solution in a shorter period of time. In addition, the first embodiment can be performed easily, and thus the costs during the actual performance of the embodiment can be reduced.

### [Modification of First Embodiment]

In the first embodiment, the contact step may be a step (hereinafter, also referred to as a "modified contact step") of bringing steelmaking slag subjected to the magnetic separation into contact with an aqueous solution containing carbon dioxide while fracturing or pulverizing the steelmaking slag, or grinding the surface of the steelmaking slag (hereinafter, also collectively and simply referred to as a "fracturing or the like").

### (Modified Contact Step: Bringing Steelmaking Slag into contact with CO₂ Aqueous Solution while fracturing or the like)

The elution of Ca from steelmaking slag occurs upon contact of Ca compounds or Ca with a CO₂ aqueous solution in the vicinity of the surface of the steelmaking slag or inside the steelmaking slag. Therefore, during the contacting of steelmaking slag with a CO₂ aqueous solution, subjecting the steelmaking slag in contact with the CO₂ aqueous solution to fracturing or the like increases the surface area of slag particles that can be in contact with the CO₂ aqueous solution, and thus it becomes possible to bring a larger amount of Ca into contact with the CO₂ aqueous solution, or to increase the amount of the CO₂ aqueous solution permeating through the inside of the slag particles.

In addition, when components contained in the steelmaking slag dissolve in the CO₂ aqueous solution, for example, Fe, Al, Si and/or Mn, and/or hydroxides, carbonates and/or hydrates thereof may remain or be precipitated on the surface of the steelmaking slag. When the remaining or precipitated substances prevent the steelmaking slag from contacting the CO₂ aqueous solution, Ca becomes less likely to be eluted from the inside of the steelmaking slag. Subjecting the steelmaking slag in contact with the CO₂ aqueous solution to fracturing or the like continuously forms new surfaces where the above described substances do not remain or are not precipitated, and the CO₂ aqueous solution can permeate through the steelmaking slag from the newly formed surfaces, and therefore, Ca in the inside of the steelmaking slag also becomes more likely to be eluted. In addition, grinding the surface of the steelmaking slag removes the remaining or precipitated substances to increase the contact area between the CO₂ aqueous solution and the slag particles and allow the CO₂ aqueous solution to permeate more easily through the steelmaking slag.

Specifically, steelmaking slag is immersed in a CO₂ aqueous solution, and at the same time, a conventional crusher usable in a wet method is used, thereby fracturing the immersed steelmaking slag. Alternatively, slag particles may be subjected to pulverizing and at the same time to fracturing or the like in a CO₂ aqueous solution by rotating a ball mill charged with the slag particles, the CO₂ aqueous solution and pulverizing balls.

The present step is preferably continued until the maximum particle diameter of the slag particles becomes 1,000 µm or less, preferably 500 µm or less, more preferably 250 µm or less, and even more preferably 100 µm or less, for increasing the elution amounts of calcium.

### (Effects)

The modification of the first embodiment is capable of eluting a larger amount of Ca into the CO₂ aqueous solution in an even shorter period of time. In addition, the present modification can be performed easily, and thus the costs during the actual performance of the modification can be reduced.

### [Second Embodiment]

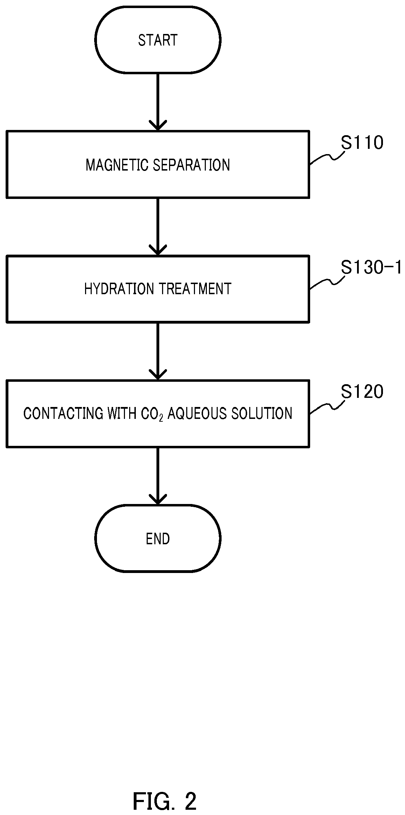

Each of FIGS. 2 to 5 is a flowchart of a method according to another embodiment of the present invention, for eluting Ca from steelmaking slag. As illustrated in FIGS. 2 to 5, each method according to the present embodiment for eluting Ca from steelmaking slag includes a step of subjecting steelmaking slag to magnetic separation (Step S110: magnetic separation step); at least one of steps of subjecting the steelmaking slag to hydration treatment (Steps S130-1 to S130-5: hereinafter also referred to as "hydration step" each); and bringing the steelmaking slag subjected to the magnetic separation and hydration treatment into contact with a CO₂ aqueous solution (Step S120: contact step). The description for the magnetic separation step and contact step is omitted in the present embodiment as these steps can be performed in the same manner as in the above described first embodiment.

### (Hydration Step: Hydration Treatment of Steelmaking Slag)

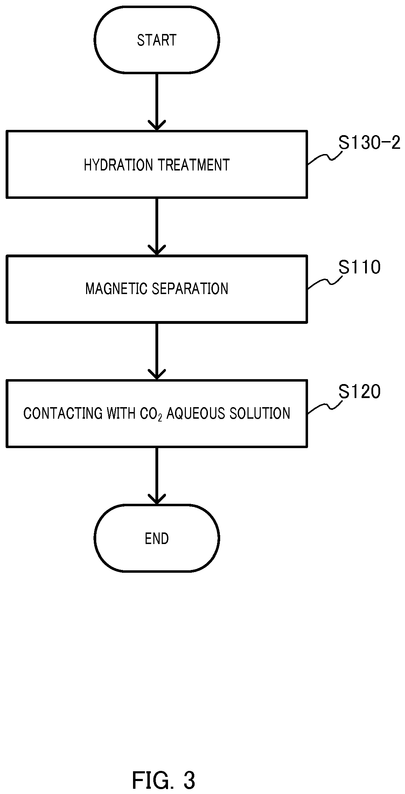

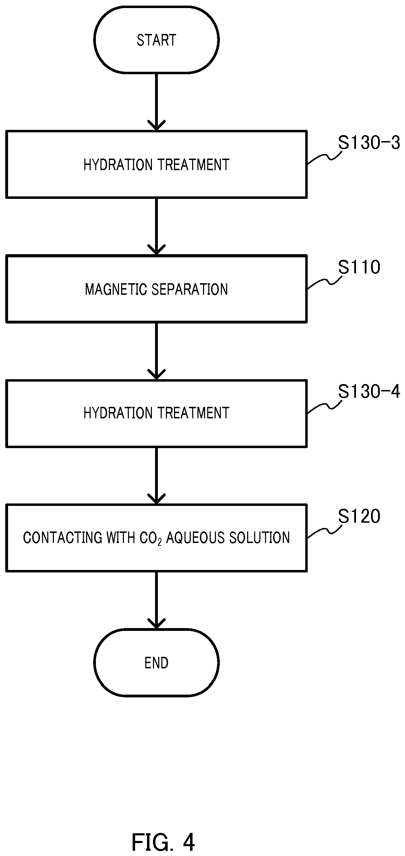

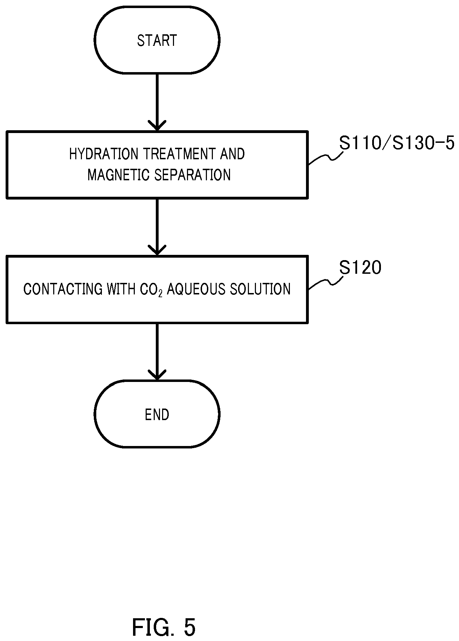

The present step may be performed after the magnetic separation step as illustrated in FIG. 2, before the magnetic separation step as illustrated in FIG. 3, before and after the magnetic separation step as illustrated in FIG. 4, or simultaneously with the magnetic separation step as illustrated in FIG. 5. Further, the hydration step may be performed before and simultaneously with the magnetic separation step, simultaneously with and after the magnetic separation step, or before, simultaneously with and after the magnetic separation step. The hydration step may be repeated more than once, for example, before, after and/or simultaneously with the magnetic separation step.

As described above, steelmaking slag contains Ca in the forms of, for example, free lime, calcium hydroxide (Ca(OH)₂), calcium carbonate (CaCO₃), calcium silicate (such as Ca₂SiO₄ or Ca₃SiO₅) and calcium iron aluminum oxide (Ca₂(Al_{1-X}Fe_{X})₂O₅).

When subjecting the steelmaking slag to the hydration treatment, obtained are, for example, calcium silicate hydrates and calcium hydroxide (Ca(OH)₂) from calcium silicate by the reaction represented by the following equation 1, and hydroxides of calcium oxides from calcium iron aluminum oxide by the reaction represented by the following equation 2 (hereinafter, compounds containing calcium, which can be obtained by the hydration treatment are also collectively referred to as "Ca hydrates"):

2(2CaO·SiO₂) + 4H₂O → 3CaO·2SiO₂·3H₂O + Ca(OH)₂ ... (Equation 1)

2CaO·1/2(Al₂O₃·Fe₂O₃) + 10H₂O → 1/2(4CaO·Al₂O₃·19H₂O) + HFeO₂ ... (Equation 2)

(equation 2 is an example in which X is 1/2 in calcium iron aluminum oxide (Ca₂(Al_{1-X}Fe_{X})₂O₅)).

The Ca hydrates generated, for example, by the above reactions easily dissolve in a CO₂ aqueous solution. Subjecting steelmaking slag to hydration treatment thus makes it possible to elute Ca derived from, for example, calcium silicate and calcium iron aluminum oxide contained in the steelmaking slag more easily.

The free lime, which is easily dissolved in a CO₂ aqueous solution, typically exists in steelmaking slag only in an amount of less than about 10 mass%. On the other hand, calcium silicate and calcium iron aluminum oxide typically exists in steelmaking slag in an amount of about 25 mass% to 70 mass%, and about 2 mass% to 30 mass%, respectively. Therefore, when the hydration treatment can elute Ca contained in, for example, calcium silicate and calcium iron aluminum oxide into a CO₂ aqueous solution more easily, the amount of Ca eluted from steelmaking slag into the CO₂ aqueous solution may increase, and it is possible to shorten the time for recovering Ca from the steelmaking slag.

In addition, the total volume of compounds generated by the hydration treatment is usually larger than the total volume of the corresponding compounds before the reaction. During the hydration treatment, free lime in the steelmaking slag is partly eluted into water used for the treatment. Subjecting steelmaking slag to hydration treatment thus generates cracks inside slag particles, and the slag particles are more likely to disintegrate from these cracks. Such disintegration of the slag particles reduces the particle diameter of the slag particles, and increases the surface area per volume thereof, as well as allowing water or a CO₂ aqueous solution to satisfactorily permeate through the steelmaking slag. This enables hydration of a large amount of Ca compounds in the present step, and elution of a larger amount of Ca in the contact step.

Hydration treatment may be performed by a method and under conditions which can hydrate any Ca compound contained in steelmaking slag, preferably calcium silicate or calcium iron aluminum oxide.

Specific examples of the hydration treatment include, for example, the following methods: leaving steelmaking slag which is immersed and sunk in water to stand (hereinafter, also simply referred to as a "immersion and still standing"); stirring steelmaking slag immersed in water (hereinafter, also simply referred to as a "immersion and stirring"); leaving a paste containing slag particles and water to stand (hereinafter, also simply referred to as a "still standing in paste form"); and leaving steelmaking slag to stand in a container including a satisfactory amount of water vapor (hereinafter, also simply referred to as a "still standing in wet condition"). Any one of these methods can satisfactorily contact steelmaking slag with water. The hydration treatment may be performed by only one of the methods, namely the immersion and still standing, the immersion and stirring, the still standing in paste form, the still standing in wet condition and the like, or by two or more of the above methods in any order.

When performing the hydration treatment by the still standing in wet condition, the relative humidity is preferably 70% or more for ensuring satisfactory condensing water vapor between slag particles by capillary condensation to allow water reach the slag particles.

When simultaneously performing the magnetic separation and hydration treatment, the slurry-formed steelmaking slag may be in contact with water for a long period of time by, for example, performing the magnetic separation in a wet method for a long period of time, or circulating the slurry when subjecting to the magnetic separation in a wet method. For circulating the slurry, the slurry may be immersed and stirred in a tank provided on a circulation path.

During the performance of the hydration treatment by the immersion and still standing, the immersion and stirring, or the still standing in paste form, water used therefor preferably contains less than 300 mg/l of carbon dioxide including, for example, non-ionized free carbonate, and ionized hydrogen carbonate ions (HCO₃⁻). With the carbon dioxide content being less than 300 mg/l, Ca compounds other than free lime and calcium hydroxide are less likely to be eluted into the water used for the hydration treatment, and thus most of Ca contained in steelmaking slag can be eluted into the CO₂ aqueous solution in the contact step, which less likely complicates a Ca recovery process. Further, when the water contains a large amount of carbon dioxide, carbon dioxide is reacted with Ca eluted from free lime, calcium hydroxide and the like, and generated calcium carbonate is precipitated to cover the surface of the slag particles, which makes hydration reactions less likely to proceed. However, when the carbon dioxide content is less than 300 mg/l, the prevention of hydration reactions caused by the precipitation of calcium carbonate is less likely to occur. Industrial water usually contains less than 300 mg/l of carbon dioxide, and therefore, industrial water to which carbon dioxide is not intentionally added or mixed is preferred as the water to be used for the hydration treatment performed by the immersion and still standing, and the immersion and stirring.

During the performance of the hydration treatment by the immersion and still standing, the immersion and stirring, or the still standing in paste form, the water used for the hydration treatment may have a temperature at which the water is not violently evaporated at the most. For example, the temperature of the water is preferably 100°C or less when steelmaking slag is subjected to the hydration treatment at substantially atmospheric pressure. When the hydration treatment is performed under a higher pressure by using, for example, an autoclave, the water temperature may be more than 100°C, as long as the temperature is lower than the boiling point of the water under the pressure applied during the hydration treatment. Specifically, the water temperature during the hydration treatment performed by the immersion and still standing, or the immersion and stirring is preferably 0°C or more and 80°C or less. While there is no limitation to the upper limit of the water temperature when performing the hydration treatment under a higher pressure by using, for example, an autoclave, a temperature of 300°C or less is preferred from the view point of the pressure resistance property of an apparatus, and in an economical aspect. The temperature during the performance of the hydration treatment by the still standing in paste form is preferably 0°C or more and 70°C or less.

When subjecting steelmaking slag to the hydration treatment by the still standing in wet condition, the relative humidity may be increased by introducing water vapor into a gas, such as air, nitrogen (N₂), oxygen (O₂), argon (Ar) or helium (He), or a gas composed only of water vapor may be used. While the relative humidity and temperature in the container may be set to any values, the temperature of a gas at which water vapor is introduced under, for example, substantially atmospheric pressure may be 0°C or more and 100°C or less, preferably 10°C or more and 100°C or less, and the relative humidity of the gas may be 70% or more. The gas may be stirred for more uniform hydration of Ca compounds.

When subjecting steelmaking slag to the hydration treatment by the still standing in wet condition using a gas composed only of water vapor, it is preferred to heat the water vapor, thereby increasing the water vapor pressure to the atmospheric pressure or more. Setting the water vapor pressure to atmospheric pressure or more enables easier filling of the container with water vapor, which can, for example, omit pressure reduction previous to the introduction of water vapor into the container. This enables reduction of facility cost and management cost, thereby performing easier and less expensive hydration treatment. While the water vapor pressure is set to the atmospheric pressure or more, the water vapor temperature may be, for example, 100°C or more. As with the case of an autoclave, while there is no limitation to the upper limit of the water temperature, a temperature of 300°C or less is preferred from the view point of the pressure resistance property of an apparatus, and in an economical aspect.

The duration of the hydration treatment may be set to any period of time in accordance with, for example, the average particle size of the slag and the temperature during the hydration treatment (the temperature of water or air containing water vapor). A smaller average particle size of the slag or a higher temperature during the hydration treatment enables performance of the hydration treatment in a shorter duration.

For example, when subjecting steelmaking slag, with the maximum particle diameter of the slag particles thereof of 1,000 µm or less, to the hydration treatment by the immersion and still standing or the immersion and stirring at normal temperature, the duration of the hydration treatment may be about 8 hours without interval, preferably 3 hours or more and 30 hours or less. When performing the hydration treatment by immersion in water at 40°C or more and 70°C or less, the duration of the hydration treatment is preferably 0.6 hours or more and 8 hours or less, without interval.

In addition, when subjecting steelmaking slag, with the maximum particle diameter of the slag particles thereof of 1,000 µm or less, to the hydration treatment by the still standing in paste form at normal temperature, the duration of the hydration treatment may be about 7 hours without interval, preferably 3 hours or more and 30 hours or less. When performing the hydration treatment by the still standing with contained water at 40°C or more and 60°C or less, the duration of the hydration treatment is preferably 0.5 hours or more and 8 hours or less without interval.

When subjecting steelmaking slag, with the maximum particle diameter of the slag particles thereof of 1,000 µm or less, to the hydration treatment by the still standing in wet condition under the atmosphere with relative humidity of 90% and at normal temperature, the duration of the hydration treatment may be about 10 hours without interval, preferably 1 hour or more and 40 hours or less. During the performance of the hydration treatment using a gas composed only of water vapor at 100°C or more, the duration of the hydration treatment is preferably 0.2 hours or more and 5 hours or less without interval.

Predetermined average particle size of steelmaking slag and conditions for the hydration treatment (e.g., temperature and duration) for satisfactorily increasing the Ca recovery rate (for example, no higher recovery rate can be obtained) can be determined, and referred to from the next hydration treatment.

In addition, the hydration treatment is preferably continued until calcium silicate satisfactorily becomes hydrates and calcium hydroxide, and/or calcium iron aluminum oxide satisfactorily becomes hydroxides of calcium oxides. The hydration treatment is, for example, preferably continued until the amount of calcium silicate or calcium iron aluminum oxide contained in steelmaking slag becomes 50 mass% or less, or 20 mass% or less, respectively.

The steelmaking slag in a solid or slurry form after subjected to the hydration treatment may be used for the contact step as it is; however, when the hydration treatment is performed by the immersion and still standing, the immersion and stirring, or the still standing in paste form, the steelmaking slag subjected to the hydration treatment is preferably separated into steelmaking slag and a liquid component by solid-liquid separation. The solid-liquid separation may be performed by any conventional method, such as vacuum filtration or pressure filtration. The liquid component obtained by the solid-liquid separation (hereinafter, also simply referred to as a "hydration-treatment water") becomes alkaline as the hydration-treatment water contains Ca eluted from the steelmaking slag. Therefore, the liquid component can be used for a below-described step of increasing the pH of a CO₂ aqueous solution, which has been in contact with steelmaking slag and thus includes Ca eluted therein, during the precipitation of the eluted Ca.

### [First Mode of Second Embodiment]

FIG. 2 is a flowchart illustrating a method according to the first mode of the present embodiment, for eluting Ca from steelmaking slag. As illustrated in FIG. 2, the magnetic separation step (Step S110), the hydration step (Step S130-1) and the contact step (Step S120) are performed in this order in the present mode.

The hydration treatment performed on steelmaking slag in the hydration step (Step S130-1) may be any one of the immersion and still standing, the immersion and stirring, the still standing in paste form and the still standing in wet condition; however, for simplifying subsequent steps by simultaneously performing the hydration treatment and the solid-liquid separation, the immersion and still standing or the still standing in paste form is preferred.

The magnetic separation reduces the volume of steelmaking slag, and therefore, performing the hydration step (Step S130-1) after the magnetic separation step (Step S110) can subject the steelmaking slag to the hydration treatment more effectively.

### [Second Mode of Second Embodiment]

FIG. 3 is a flowchart illustrating a method according to the second mode of the present embodiment, for eluting Ca from steelmaking slag. As illustrated in FIG. 3, the hydration step (Step S130-2), the magnetic separation step (Step S110), and the contact step (Step S120) are performed in this order in the present mode.

The hydration treatment performed on steelmaking slag in the hydration step (Step S130-2) may be any one of the immersion and still standing, the immersion and stirring, the still standing in paste form and the still standing in wet condition; however, for dispersing agglomerated slurry particles, thereby more selectively capturing iron-based compounds and metal iron in the following magnetic separation step (Step S110), the immersion and stirring is preferred.

### [Third Mode of Second Embodiment]

FIG. 4 is a flowchart illustrating a method according to the third mode of the present embodiment, for eluting Ca from steelmaking slag. As illustrated in FIG. 4, the hydration step (Step S130-3), the magnetic separation step (Step S110), the hydration step (Step S130-4), and the contact step (Step S120) are performed in this order in the present mode.

The hydration treatment performed on steelmaking slag in the hydration steps (Step S130-3 and Step S130-4) may be any one of the immersion and still standing, the immersion and stirring, the still standing in paste form and the still standing in wet condition. As in the second mode, the hydration treatment performed on steelmaking slag in the hydration step (Step S130-3) before the magnetic separation is preferably the immersion and stirring for dispersing agglomerated slurry particles, thereby more selectively capturing iron-based compounds and metal iron in the following magnetic separation step (Step S110). As in the second mode, the hydration treatment performed on steelmaking slag in the hydration step (Step S130-4) after the magnetic separation is preferably the immersion and still standing or the still standing in paste form for simplifying subsequent steps by simultaneously performing the hydration treatment and the solid-liquid separation.

### [Fourth Mode of Second Embodiment]

FIG. 5 is a flowchart illustrating a method according to the fourth mode of the present embodiment, for eluting Ca from steelmaking slag. As illustrated in FIG. 5, the hydration step and the magnetic separation step are simultaneously performed (Step S110/S130-5), followed by the contact step (Step S120) in the present mode.

The hydration step and the magnetic separation step can be simultaneously performed by subjecting slurry-formed steelmaking slag to the magnetic separation for the period of time sufficient for satisfactorily hydrating Ca compounds contained in the steelmaking slag, particularly calcium silicate that is difficult to capture by the magnetic separation. For example, about one hour of magnetic separation on slurry-formed steelmaking slag can simultaneously perform the hydration treatment and the magnetic separation.

In addition, the immersion and still standing or the immersion and stirring may be performed in a storage tank by circulating the slurry between the magnetic separator and the storage tank at a circulation rate adjusted so that the flow rate of the slurry in the tank becomes satisfactorily slow.

### (Effects)

The second embodiment is capable of hydrating Ca compounds contained in steelmaking slag, particularly calcium silicate and calcium iron aluminum oxide, to generate Ca hydrates which can be eluted into a CO₂ aqueous solution more easily, and thus a larger amount of Ca can be eluted into the CO₂ aqueous solution in a shorter period of time. In addition, the hydration treatment in the second embodiment can be performed easily, and thus the costs during the actual performance of the embodiment can be reduced.

### [First Modification of Second Embodiment]

When the hydration step is the immersion and stirring in the first to third modes of the second embodiment, the immersed steelmaking slag may be subjects to the fracturing or the like at the same time (hereinafter also referred to as "modified hydration step").

### (Modified Hydration Step: Bringing Steelmaking Slag into contact with CO₂ Aqueous Solution while fracturing or the like)

Reactions during the above described hydration treatment occur upon contact of Ca compounds with water in the vicinity of the surface of the steelmaking slag or inside the steelmaking slag. While water permeates through the steelmaking slag to some extent, a larger amount of water contacts the vicinity of the surface. Ca hydrates is thus more likely to be generated in the vicinity of the surface of the steelmaking slag. In addition, when components contained in the steelmaking slag dissolve in the water used for the hydration treatment, for example, Fe, Al, Si and Mn, and/or hydroxides, carbonates and/or hydrates thereof may remain or be precipitated on the surface of the steelmaking slag, as in the above described case of dissolution into a CO₂ aqueous solution. When the remaining or precipitated substances prevent water from permeating through the steelmaking slag, Ca hydrates becomes less likely to be generated inside the steelmaking slag.

Subjecting the steelmaking slag immersed in water to fracturing or the like during the hydration treatment, meanwhile, increases the surface area of slag particles, thereby increasing the contact area between the water and the slag particles. Subjecting the steelmaking slag immersed in water to fracturing or the like also continuously forms new surfaces where the above described substances do not remain or are not precipitated, and water can permeate through the steelmaking slag from the continuously formed new surfaces, and therefore, Ca hydrates becomes more likely to be generated even inside the steelmaking slag. In addition, grinding the surface of the steelmaking slag removes the remaining or precipitated substances to increase the contact area between the water and the slag particles and allow water to permeate more easily through the steelmaking slag.

Specifically, steelmaking slag is immersed in water, and at the same time, a conventional crusher usable in a wet method is used, thereby fracturing the immersed steelmaking slag. Alternatively, performing the hydration treatment and pulverizing slag particles in water at the same time by rotating a ball mill charged with the slag particles, water and pulverizing balls.

The present step can easily elute Ca more quickly in an amount the same or more as compared to the above embodiment including the first step. For example, when using steelmaking slag with the maximum particle diameter thereof of 1,000 µm or less, the duration of the present step is preferably 0.1 hour or more and 5 hours or less, and more preferably 0.2 hours or more and 3 hours or less, without interval.

The present step is preferably continued until the maximum particle diameter of the slag particles becomes 1,000 µm or less, preferably 500 µm or less, more preferably 250 µm or less, and even more preferably 100 µm or less. Therefore, the present step can be performed simultaneously with the fracturing steelmaking slag or pulverizing slag particles without complicating the steps.

In particular, when the hydration step (Step S130-2 or Step S130-3) is performed before the magnetic separation step (Step S110) as in the second or third mode of the second embodiment, performing the modified hydration step in place of the hydration step can reduce the particle diameter of steelmaking slag to fall within the above range while performing the hydration treatment, and thus the load on the fracturing or the like of the steelmaking slag can also be reduced.

### (Effects)

The first modification is capable of eluting a larger amount of Ca into a CO₂ aqueous solution in an even shorter period of time. In addition, the present modification can be performed without complicating the steps, such as being performed simultaneously with the fracturing steelmaking slag or the pulverizing slag particles, and thus the costs during the actual performance of the embodiment can be reduced.

### [Second Modification of Second Embodiment]

In the second embodiment, the contact step may also be a step (modified contact step) of bringing steelmaking slag subjected to the magnetic separation into contact with an aqueous solution containing carbon dioxide while subjecting the steelmaking slag to the fracturing or the like.

The second modification of the second embodiment is capable of eluting a larger amount of Ca into the CO₂ aqueous solution in an even shorter period of time. The present modification can be performed easily, and thus the costs during the actual performance of the modification can be reduced.

### 2. Method for recovering Ca from Steelmaking Slag

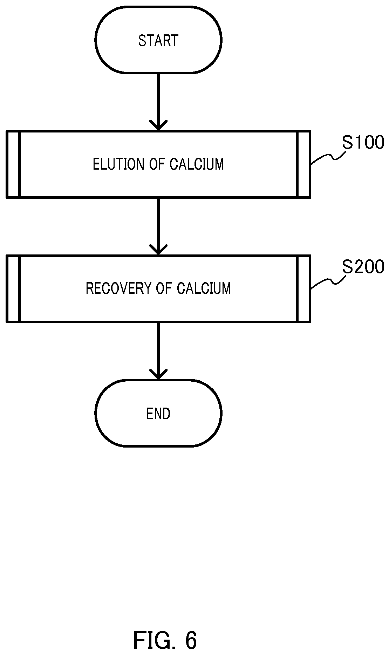

FIG. 6 is a flowchart of a method according to the third embodiment of the present invention for recovering Ca eluted in a CO₂ aqueous solution. As illustrated in FIG. 6, the present embodiment includes a step of eluting Ca (Step S100) and a step of recovering Ca (Step S200).

### [Step of eluting Ca]

In the step of eluting Ca (Step S100), Ca is eluted from steelmaking slag. Any one of the above described first and second embodiments and modifications thereof is capable of eluting Ca.

### [Step of recovering Ca]

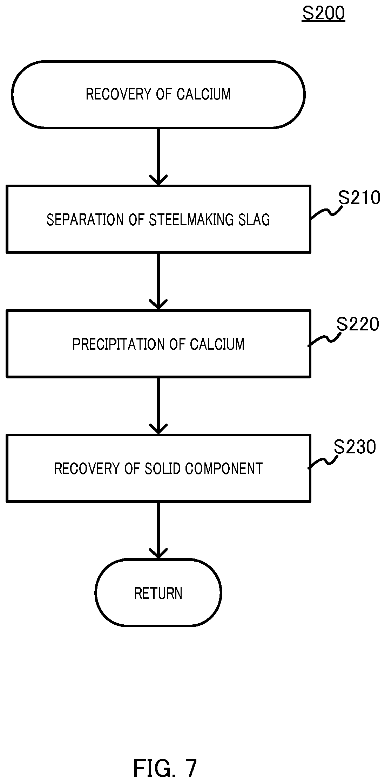

FIG. 7 is a flowchart illustrating an exemplary step of recovering Ca (Step S200). As illustrated in FIG. 7, the step of recovering Ca (Step S200) includes for its performance, for example, a step of separating steelmaking slag from a CO₂ aqueous solution (Step S210 hereinafter also referred to as "separation step"), a step of precipitating Ca (Step S220: hereinafter also referred to as "precipitation step"), and a step of recovering a precipitated solid component (Step S230: hereinafter also referred to as "recovery step").

### (Separation Step: Separation of Steelmaking Slag from CO₂ Aqueous Solution)

In the present step, steelmaking slag is separated from a CO₂ aqueous solution (supernatant) having Ca dissolved therein (Step S210). The separation may be performed by any conventional method. Examples of separating methods include filtration, and a method in which the steelmaking slag settles out by leaving the CO₂ aqueous solution to stand. In the case where the slag settles out, only the supernatant may further be recovered, or subsequent steps may be performed only on the supernatant in a two-component system containing the supernatant and the steelmaking slag that settles out, as long as a solid component precipitated in a subsequent step is not mixed with the steelmaking slag.

The present step becomes unnecessary when the steelmaking slag has already been separated from the CO₂ aqueous solution in the contact step.

### (Precipitation Step: Precipitation of Solid Component containing Ca)

In the present step, Ca eluted into the CO₂ aqueous solution is precipitated as a solid component containing Ca (Step S220). Ca eluted into the CO₂ aqueous solution can be precipitated by any conventional method. Examples of the methods for precipitating Ca eluted in a CO₂ aqueous solution as a solid component include a method that removes carbon dioxide from the CO₂ aqueous solution, and a method that increases the pH of the CO₂ aqueous solution.

### <Removal of Carbon Dioxide>

Ca eluted into a CO₂ aqueous solution in the contact step (Step S120) can be precipitated by, for example, removing carbon dioxide from the CO₂ aqueous solution separated from steelmaking slag in the separation step (Step S210). Examples of Ca compounds to be precipitated in this procedure include calcium carbonate, calcium carbonate hydrate and calcium hydroxide.

Any method can be employed for removing carbon dioxide from a CO₂ aqueous solution. Examples of the methods for removing carbon dioxide include (1) gas introduction, (2) pressure reduction and (3) heating.

### (1) Gas Introduction

Carbon dioxide can be removed from a CO₂ aqueous solution having Ca dissolved therein by introducing into the CO₂ aqueous solution a gas having a partial pressure of carbon dioxide lower than the equilibrium pressure of carbon dioxide dissolved in the CO₂ aqueous solution to replace the dissolved carbon dioxide by the introduced gas, or to diffuse (transfer) carbon dioxide into bubbles of the introduced gas. While the gas to be introduced may be a gas reactive to water (such as chlorine and sulfur dioxide), a gas having low reactivity to water is preferred for suppressing the reduction of the precipitated Ca amount due to the formation of salts from the eluted calcium and ions generated by the introduction of a gas reactive to water into the CO₂ aqueous solution. The gas to be introduced into the CO₂ aqueous solution may be an inorganic gas or an organic gas. An inorganic gas is more preferred since the possibility of combustion or explosion is low when the gas leaks outside. Examples of the inorganic gases having low reactivity to water include air, nitrogen, oxygen, hydrogen, argon, helium and mixed gases thereof. An example of the mixed gas is air in the environment where the present step is performed, which contains nitrogen and oxygen in an approximate ratio of 4 to 1. Examples of the organic gases having low reactivity to water include methane, ethane, ethylene, acetylene, propane and fluorocarbons.

### (2) Pressure Reduction

Under the pressure environment of about one atmospheric pressure (about 100 kPa) or less, the solubility of carbon dioxide decreases when the pressure applied on a CO₂ aqueous solution decreases. Therefore, carbon dioxide can be removed from the CO₂ aqueous solution by placing the CO₂ aqueous solution under a reduced-pressure environment. For example, carbon dioxide can be removed by putting the CO₂ aqueous solution into an airtight container and evacuating air (degassing) of the container using, e.g., a pump to allow the container to have a reduced-pressure atmosphere. For further increasing the amount of removed carbon dioxide, the pressure reduction may be simultaneously performed with applying ultrasonic waves to the CO₂ aqueous solution or stirring the CO₂ aqueous solution.

### (3) Heating

Under the pressure environment of about one atmospheric pressure (about 100 kPa) or less, the solubility of carbon dioxide decreases when the temperature of a CO₂ aqueous solution increases. Therefore, carbon dioxide can be removed from the CO₂ aqueous solution by heating the CO₂ aqueous solution. For lowering heating costs, the CO₂ aqueous solution is preferably heated to a temperature within such a range that the vapor pressure of the solution does not exceed the pressure in the atmosphere. When the pressure in the atmosphere is one atmospheric pressure, for example, the heating temperature is preferably less than 100°C. Heating the CO₂ aqueous solution not only removes carbon dioxide, but also lowers the solubility of Ca compounds (e.g., calcium carbonate), and thus Ca can be precipitated more easily.

The above methods (1) to (3) may be performed in a combination for further increasing the amount of removed carbon dioxide. The most suitable combination can be selected in view of, for example, a delivery system of a gas or heat, a site location, or availability of a by-product gas in a factory.

For example, while keeping introducing a gas into the CO₂ aqueous solution, air evacuation is performed in an amount that is the same as or more than the amount of the introduced gas to achieve a reduced-pressure atmosphere. In such a manner, the gas introduction can provide effects of removing carbon dioxide and stirring, and the pressure reduction of the CO₂ aqueous solution can provide an effect of removing carbon dioxide, and thus carbon dioxide can be removed effectively. Heating in addition to this procedure can further accelerate removal effects of carbon dioxide. Since carbon dioxide can be easily removed due to the additive effects of the gas introduction into the CO₂ aqueous solution and pressure reduction of the CO₂ aqueous solution, the heating temperature is not necessarily high, and thus heating costs can be reduced.

### <Increasing pH>

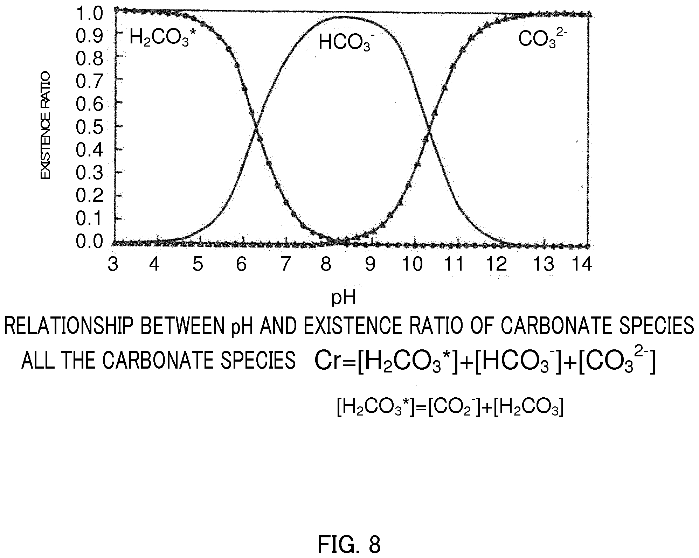

Increasing the pH of the CO₂ aqueous solution separated from the steelmaking slag can precipitate a solid component containing calcium in the CO₂ aqueous solution. The existence state of carbon dioxide in an aqueous solution can be represented by the equations 3 to 5 below. The equilibrium is achieved as shown in equations 3 to 4 until about pH 8.5, and in equations 4 to 5 at pH 8.5 and above. FIG. 8 shows the existence ratio of each of ions and substances. In FIG. 8, [H₂CO₃*] represents the total amount of [CO₂] and [H₂CO₃]. It can be considered from FIG. 8 that calcium is precipitated by generation of poorly-soluble calcium carbonate (CaCO₃) from calcium ion (Ca²⁺) bonding to hydrogen carbonate ion (HCO₃⁻) until about pH 8.5 as represented in equation 6. At pH 8.5 and above, calcium is considered to be precipitated by generation of poorly-soluble calcium carbonate (CaCO₃) from a bonding reaction of calcium ion and carbonate ion as represented in equation 7. FIG. 8 showing the relationship between the existence state of carbon dioxide and the pH is described in known references (e.g., "Fushoku·Boushoku Handobukku (Corrosion-Anticorrosion handbook)," page 155, published in 2000, by Japan Society of Corrosion Engineering).

CO₂ + H₂ ⇄ H₂CO₃ ... (Equation 3)

H₂CO₃ ⇄ H⁺ + HCO₃⁻ ... (Equation 4)

HCO₃⁻ ⇄ H⁺ + CO₃²⁻ ... (Equation 5)

Ca²⁺ + HCO₃⁻ ⇄ H⁺ + CaCO₃ ... (Equation 6)

Ca²⁺ + CO₃²⁻ ⇄ CaCO₃ ... (Equation 7)

Upon increasing the pH of an aqueous solution that is obtained by bringing steelmaking slag into contact with an aqueous solution containing carbon dioxide to elute calcium, followed by solid-liquid separation, substantially all of Ca is precipitated until the pH becomes 8.5, and therefore the reaction between the calcium ion and the hydrogen carbonate ion is most common.

When the precipitation of Ca starts, cloudiness caused by calcium carbonate is generated in the CO₂ aqueous solution. It is sufficient to continue to increase the pH of the CO₂ aqueous solution until the cloudiness can be confirmed by visual observation. For further increasing the recovery rate of Ca by precipitating Ca more sufficiently, the pH of the CO₂ aqueous solution separated from the steelmaking slag in the separation step (Step S210) is increased preferably by 0.2 or more, more preferably by 0.3 or more, still more preferably by 1.0 or more, even more preferably by 1.5 or more, and particularly preferably by 2.0 or more.

The pH of the CO₂ aqueous solution is preferably increased while measuring the same. The pH of the CO₂ aqueous solution can be measured by any conventional glass electrode method.

While solid components containing not only Ca but also other elements, such as phosphorus are precipitated in the present step, according to the present inventors' findings, the content ratio of compounds including phosphorus (hereinafter, also simply referred to as a "phosphorus compounds") in a solid component precipitated immediately after the start of increasing pH (hereinafter also referred to as "early stage precipitate") is higher, and the content ratio of phosphorus in a solid component precipitated later (hereinafter also referred to as "later stage precipitate") is lower. Therefore, recovering the early stage precipitate by performing a below-described step of recovering (Step S230) during the step of increasing pH can recover a solid component with a higher phosphorus ratio separately from a solid component with a lower phosphorus ratio.

The phosphorus compounds recovered from steelmaking slag can be reused as a phosphorus source. Therefore, recovery of the solid component with a high content of the phosphorus compounds enables easy reuse of phosphorus. In addition, while Ca compounds recovered from steelmaking slag can be reused as iron-making materials, produced iron would become brittle when the iron-making materials contain phosphorus compounds. The content of the phosphorus compounds in the solid component for reuse as an iron-making material is thus preferably low. Therefore, when a solid component with high phosphorus compound content and a solid component with low phosphorus compound content are separately obtained from a CO₂ aqueous solution containing phosphorus and Ca, refining of the recovered solid component becomes easier or unnecessary, and also the quality of products made from the recovered solid components can be further improved.

During this procedure, most of phosphorus is precipitated before the pH of the CO₂ aqueous solution increases by 1.0. For further increasing the content ratio of phosphorus in the early stage precipitate and that of calcium in the later stage precipitate, the early stage precipitate is recovered before the pH increases by preferably 1.0, more preferably 0.6, and still more preferably 0.4.

The pH of a CO₂ aqueous solution can be increased by, for example, adding an alkaline substance into the CO₂ aqueous solution. Examples of the alkaline substances that can be fed into the CO₂ aqueous solution include calcium hydroxide, ammonia and sodium hydroxide. Calcium hydroxide, ammonia or sodium hydroxide can be fed by dissolving the same in water, and adding the resultant solution to the CO₂ aqueous solution. Calcium hydroxide, ammonia and sodium hydroxide each may be a commercial product, or a substance contained in a liquid such as a waste fluid. In the case of adding calcium hydroxide contained in a waste fluid, a waste fluid generated during the production of acetylene by reacting, e.g., calcium carbide with water can be added to the CO₂ aqueous solution. The slag-immersed water provided by immersing steelmaking slag into water, the above described magnetic-separation water or hydration-treatment water may be added to the CO₂ aqueous solution. The slag-immersed water, magnetic-separation water and hydration-treatment water may be obtained by subjecting the steelmaking slag from which calcium is to be recovered or alternatively another steelmaking slag to immersion into water, magnetic separation or hydration treatment, respectively. Among the alkaline substances, calcium hydroxide, a waste fluid mostly composed of calcium hydroxide, the slag-immersed water, the magnetic-separation water or the hydration-treatment water is preferred for use. These contain mostly calcium hydroxide, and therefore using the same can reduce the amount of unnecessary substances, such as ammonia and sodium, mixed in the obtained calcium compounds. Unlike the use of ammonia and sodium hydroxide that remain in water, reprocessing of water after the recovery of calcium compounds becomes unnecessary.

Increasing the pH of a CO₂ aqueous solution also causes precipitation of, for example, Fe, Mn and P contained in the CO₂ aqueous solution in small amounts, as the solid component. Accordingly, an aqueous solution after the recovery of Ca therefrom (former CO₂ aqueous solution) by the method according to the present embodiment allows waste water treatment to become simpler or unnecessary, thereby suppressing the waste water treatment cost.

The aqueous solution after the recovery of Ca therefrom (former CO₂ aqueous solution) contains substantially no metallic elements, such as Ca, Fe, Mn, Al and P, and CO₂, and thus can be reused in the same step, thereby achieving no waste water.

For further increasing the recovery rate of Ca, removal of carbon dioxide may be performed in combination with the increasing pH.

### (Recovery Step: Recovery of Solid Component)

In the present step, a solid component precipitated in the precipitation step (Step S220) is recovered (Step S230). The precipitated solid component can be recovered by any conventional method, such as vacuum filtration or pressure filtration. The solid component contains Ca derived from steelmaking slag.

Hereinafter, the present invention will be described more specifically with reference to Examples. However, these Examples do not limit the scope of present invention to the specific methods described below.

### Examples

### [Experiment 1]

Steelmaking slag A and steelmaking slag B each having a component ratio as shown in Table 1 were prepared. The components of the steelmaking slag were measured by IPC optical emission spectrometry and chemical analysis. Steelmaking slag A and steelmaking slag B were pulverized using a hammer mill so that the average particle diameter thereof became 100 µm or less. The average particle diameter of the pulverized slag was confirmed using a laser diffraction/scattering type particle size distribution measuring device.

**[Table 1]**

| Steelmaking Slug | Component Ratio (mass%) | | | | | | |
|---|---|---|---|---|---|---|---|
| | Ca | Fe | Si | Mn | Mg | Al | P |
| A | 35.3 | 15.8 | 7.2 | 4.1 | 2.5 | 2.0 | 0.8 |
| B | 31.3 | 11.2 | 7.3 | 3.0 | 1.9 | 1.8 | 2.0 |

### 1-1. Magnetic Separation

Slag slurry was provided for each of steelmaking slag A and steelmaking slag B by dispersing the steelmaking slag into 50 times as much amount of water by mass ratio.

For each of steelmaking slag A and steelmaking slag B, a part of the pulverized steelmaking slag was subjected to the heat treatment in the air at 600°C for 10 minutes. Subsequently, two portions of slag slurry were provided for each of steelmaking slag A and steelmaking slag B by dispersing the steelmaking slag subjected to the heat treatment and then cooled to room temperature into 50 times as much amount of water by mass ratio.

Each obtained slag slurry was poured into the lower part of a drum type magnetic separator, which has a permanent magnet fixed on the bottom half of the rotating drum thereof, and the rotating drum was rotated at the peripheral speed of 3 m/min for 5 minutes. The slag magnetically attracted to the rotating drum was then recovered from the top. The magnetic flux density on the drum surface of the magnetic separator was set to 0.03T.

The Fe content in the recovered slag was measured by the ICP spectrometry and chemical analysis. The Fe recovery rate (%) of the magnetic separation was calculated by dividing the measured Fe content in the recovered slag by the Fe content in the steelmaking slag used for the magnetic separation (steelmaking slag A or steelmaking slag B).

### 1-2. Separation of Steelmaking Slag from Water

The slag slurry that was not magnetically attracted during the magnetic separation was separated into steelmaking slag and water by pressure filtration.

As the separated water had a pH of 12.0 to 12.5, and thus was considered to contain Ca eluted from the steelmaking slag, the amount of Ca contained in the separated water was measured by ICP spectrometry and chemical analysis. The elution rate (%) of Ca after the magnetic separation was calculated by dividing the measured Ca content in the separated water by the Ca content in the steelmaking slag used for the magnetic separation (steelmaking slag A or steelmaking slag B).

For comparison, each of steelmaking slag A and steelmaking slag B was dispersed in water, and separated into steelmaking slag and water by pressure filtration after 5 minutes. The amount of Ca contained in the separated water was then measured by ICP spectrometry and chemical analysis. The elution rate (%) of Ca upon contact with water was calculated by dividing the measured Ca content in the separated water by the Ca content in the steelmaking slag used for the contact with water (steelmaking slag A or steelmaking slag B).

### 1-3. Contact with CO₂ Aqueous Solution

The steelmaking slag separated from the water was divided into two, and each half was brought into contact with a CO₂ aqueous solution by one of the following two methods.

CO₂ contact 1 (without fracturing): 0.25 kg of the steelmaking slag separated from water after the magnetic separation was mixed with 50L of water and stirred while carbon dioxide was blown at the flow rate of 7 L/min at normal temperature (20 to 40°C), thereby eluting Ca.

CO₂ contact 2 (with fracturing): a ball mill was charged with 0.25 kg of the steelmaking slag separated from water after the magnetic separation, 50L of water and 10L (apparent volume) of pulverizing balls having a ball diameter of 10 mm. Subsequently, the ball mill was rotated at a peripheral speed of 70 m/min to fracture the steelmaking slag while carbon dioxide was blown at the flow rate of 7 L/min at normal temperature (20 to 40°C), thereby eluting Ca.

After 30 minutes, each steelmaking slag was separated from the CO₂ aqueous solution, and the amount (kg/50L) of Ca eluted into the CO₂ aqueous solution was measured by ICP spectrometry and chemical analysis. The elution rate (%) of Ca upon contact with the CO₂ aqueous solution was calculated by dividing the measured Ca amount by a value obtained from the mass of immersed steelmaking slag multiplied by the Ca component ratio in the steelmaking slag.

For comparison, steelmaking slag A or steelmaking slag B was dispersed in water and immediately separated into steelmaking slag and water by pressure filtration, the same treatment was performed on the separated steelmaking slag, and the Ca amount eluted into the aqueous solution containing carbon dioxide and the elution rate of Ca were measured in the same manner.

Table 2 shows the types of steelmaking slag, whether the heat treatment and magnetic separation were performed, the Fe recovery rate in the magnetic separation, the Ca elution rate after the magnetic separation, the Ca elution rate upon contact with water, and the Ca elution rate upon contact with a CO₂ aqueous solution.

**[Table 2]**

| Category | Steelmaking Slug | Heating after Pulverizing | Magnetic Separation | Fe Recovery Rate in Magnetic Separation (%) | Ca Elution Rate after Magnetic Separation (%) | Ca Elution Rate upon Contact with Water (%) | Ca Elution Rate by CO₂ Contact 1 (without Fracturing) (%) | Ca Elution Rate by CO₂ Contact 2 (with Fracturing) (%) |
|---|---|---|---|---|---|---|---|---|
| Example 1 | A | - | Yes | 11 | 4 | - | 34 | - |
| Example 2 | B | - | Yes | 10 | 4 | - | 32 | - |
| Example 3 | A | - | Yes | 11 | 4 | - | - | 51 |
| Example 4 | A | Yes | Yes | 19 | 4 | - | - | 57 |
| Example 5 | A | Yes | Yes | 26 | 4 | - | - | 61 |
| Example 6 | B | - | Yes | 10 | 4 | - | - | 50 |
| Example 7 | B | Yes | Yes | 17 | 4 | - | - | 58 |
| Example 8 | B | Yes | Yes | 24 | 4 | - | - | 60 |
| Comparative Example 1 | A | - | No | - | - | 3 | 27 | - |
| Comparative Example 2 | B | - | No | - | - | 4 | 26 | - |
| Comparative Example 3 | A | - | No | - | - | 3 | - | 43 |
| Comparative Example 4 | B | - | No | - | - | 3 | - | 40 |

The magnetic separation of the slag slurry could have recovered 10% or more of Fe. All the compounds recovered during the procedure had the concentrations of Fe at 40 mass% or more, Mn at 5 mass% or more, and Mg at 1 mass% or more, as measured by the ICP spectrometry and chemical analysis, and thus can be reused in an iron-making process.

Bringing the steelmaking slag subjected to the magnetic separation in contact with a CO₂ aqueous solution was capable of eluting a high ratio of Ca compared to bringing the steelmaking slag in contact with a CO₂ aqueous solution without performing the magnetic separation. Adding the Ca elution rate after the magnetic separation (and before the contact with the CO₂ aqueous solution) to the above ratio gave a high recovery rate of Ca in any case.

During the procedure, when air was blown into a liquid component obtained by the solid-liquid separation after the contact with the CO₂ aqueous solution, and further the pH of the liquid component was increased by adding thereto a liquid component (having high pH) obtained by the solid-liquid separation after the magnetic separation, a calcium carbonate compound containing phosphorus was precipitated until pH 8, and thereafter a calcium carbonate compound containing less phosphorus was precipitated until pH 10. Measuring the amount of Ca precipitated by these steps revealed that most of Ca in steelmaking slag A or steelmaking slag B was recovered in the previous steps.

Subjecting steelmaking slag to the heat treatment before the magnetic separation increased both the Fe recovery rate in the magnetic separation and the Ca elution rate upon contact with a CO₂ aqueous solution after the magnetic separation.

### [Experiment 2]

Steelmaking slag A used in experiment 1 was prepared, and a part thereof was subjected to the heat treatment as in experiment 1.

### 2-1. Magnetic Separation, Hydration Treatment, and Separation of Steelmaking Slag from Water

Slag slurry from each of steelmaking slag A not subjected to the heat treatment and steelmaking slag A subjected to the heat treatment was prepared as in experiment 1, and subjected to the magnetic separation as in experiment 1, followed by separation into steelmaking slag and water by pressure filtration.

During the above procedure, hydration treatment was performed before, simultaneously with, or after the magnetic separation by one of the following methods.

### 2-1-1. Immersion and Still Standing (After Magnetic Separation)

Slag slurry which was not recovered by the magnetic separation was left to stand at room temperature for 60 minutes. Most of the steelmaking slag sank in 60 minutes.

### 2-1-2. Immersion and Stirring (Before Magnetic Separation)

Slag slurry was stirred for 60 minutes before the magnetic separation while ensuring that the steelmaking slag did not sink to the bottom and stay there. Steelmaking slag subjected to the heat treatment was subjected to the hydration treatment after the heat treatment.

When performing both the immersion and stirring before the magnetic separation and the immersion and still standing after the magnetic separation, the immersion and stirring was performed for 20 minutes, and the immersion and still standing for 40 minutes so that the total time of the hydration treatment became 60 minutes.

### 2-1-3. Still Standing in Paste Form (After Magnetic Separation)

After the separation from water by the pressure filtration, the paste-formed steelmaking slag was placed in a container and stored therein for 60 minutes while ensuring that the steelmaking slag was not dried, and kept in a paste form.

### 2-1-4. Circulation (simultaneously with Magnetic Separation)

The magnetic separation was performed by circulating slag slurry between a magnetic separator and a tank where the slag slurry was stored before being poured into the magnetic separator, for 30 minutes of rotation time of the rotating drum. During the circulation, the circulation rate was adjusted so that the flow rate of the slag slurry in the tank became satisfactorily slow.

### 2-2. Contact with CO₂ Aqueous Solution

Subsequently, each steelmaking slag was brought in contact with a CO₂ aqueous solution by the CO₂ contact 2 (with fracturing) described in experiment 1.

Table 3 shows whether the heat treatment was performed, the types of hydration treatment performed before, simultaneously with, and after the magnetic separation, the Fe recovery rate in the magnetic separation, the Ca elution rate after the magnetic separation, and the Ca elution rate upon contact with the CO₂ aqueous solution.

**[Table 3]**

| Category | Heating after Pulverizing | Hydration Treatment (before Magnetic Separation) | Hydration Treatment (simultaneously with Magnetic Separation) | Hydration Treatment (after Magnetic Separation) | Fe Recovery Rate Separation (%) | Ca Elution Rate Separation (%) | Ca Elution Rate by CO₂ Contact 2 (with Fracturing) (%) |
|---|---|---|---|---|---|---|---|
| Example 11 | - | - | - | Immersion and Still Standing | 10 | 3 | 59 |
| Example 12 | Yes | - | - | Immersion and Still Standing | 24 | 3 | 70 |
| Example 13 | Yes | - | - | Still Standing in Paste Form | 24 | 4 | 69 |
| Example 14 | - | Immersion and Stirring | - | - | 11 | 4 | 56 |
| Example 15 | Yes | Immersion and Stirring | - | - | 25 | 4 | 67 |
| Example 16 | Yes | Immersion and Stirring | - | Immersion and Still Standing | 26 | 4 | 69 |
| Example 17 | Yes | - | Circulation | - | 26 | 4 | 66 |

Bringing the steelmaking slag subjected to the magnetic separation and the hydration treatment in contact with a CO₂ aqueous solution was capable of eluting a high ratio of Ca into the CO₂ aqueous solution compared to experiment 1 that did not include the hydration treatment. Adding the Ca elution rate after the magnetic separation (and before the contact with the CO₂ aqueous solution) to the above ratio also gave a Ca recovery rate higher than those of experiment 1 in any case.

All the compounds recovered by the magnetic separation during the procedure also had the concentrations of Fe at 40 mass% or more, Mn at 5 mass% or more, and Mg at 1 mass% or more, as measured by the ICP spectrometry and chemical analysis, and thus can be reused in an iron-making process.

During the procedure as well, when air was blown into a liquid component obtained by the solid-liquid separation after the contact with the CO₂ aqueous solution, and further the pH of the liquid component was increased by adding a liquid component (having high pH) obtained by the solid-liquid separation after the magnetic separation, a calcium carbonate compound containing phosphorus was precipitated until pH 8, and thereafter a calcium carbonate compound containing less phosphorus was precipitated until pH 10. Measuring the amount of Ca precipitated by these steps revealed that most of Ca in the steelmaking slag was recovered in the previous steps.

Also in this procedure, subjecting steelmaking slag to the heat treatment before the magnetic separation increased both the Fe recovery rate in the magnetic separation and the Ca elution rate upon contact with a CO₂ aqueous solution after the magnetic separation.

This application claims priority based on Japanese Patent Application No. 2017-006614, filed on January 18, 2017, the entire contents of which including the claims, the specification and the drawings are incorporated herein by reference.

### Industrial Applicability

The method according to the present invention for eluting Ca can easily increase the elution amount of Ca from steelmaking slag into an aqueous solution containing carbon dioxide, as well as the recovery rate of Ca from the steelmaking slag, and therefore is advantageous as a method for recovering a Ca source in an iron-making process.

## Claims

1. A method for eluting calcium from steelmaking slag, the method comprising:
subjecting the steelmaking slag to magnetic separation to remove a compound containing iron from the steelmaking slag; and
contacting the steelmaking slag subjected to the magnetic separation with an aqueous solution containing carbon dioxide.

2. The method according to claim 1, wherein the contacting includes contacting the steelmaking slag with the aqueous solution containing carbon dioxide while fracturing or pulverizing the steelmaking slag, or grinding a surface of the steelmaking slag.

3. The method according to claim 1 or 2, further comprising:
subjecting the steelmaking slag to hydration treatment, and
wherein the contacting includes contacting the steelmaking slag subjected to the magnetic separation and the hydration treatment with the aqueous solution containing carbon dioxide.

4. The method according to claim 3, wherein the hydration treatment is performed before the magnetic separation.

5. The method according to claim 3 or 4, wherein the hydration treatment is performed after the magnetic separation.

6. The method according to any one of claims 3 to 5, wherein the hydration treatment is performed simultaneously with the magnetic separation.

7. The method according to any one of claims 1 to 6, further comprising:
subjecting the steelmaking slag to heat treatment before performing the magnetic separation.

8. A method for recovering calcium from steelmaking slag, the method comprising:
eluting the calcium from the steelmaking slag by the method according to any one of claims 1 to 7; and
recovering the eluted calcium.
